# EUROPEAN PATENT APPLICATION

(11) **EP 1 187 037 A1**
(43) Date of publication of application: **13.03.2002**
(21) Application number: 00119693.0
(22) Date of filing: 08.09.2000
(51) Int. Cl.: G06F 17/30

(54) **Methods and system for database manipulation with partial orderings**

(71) Applicant: Database Preference Software GmbH, 86159 Augsburg (DE)
(72) Inventor: Köstler, Gerhard, Dr., 80689 München (DE); Kissling, Werner, Prof. Dr., 86163 Augsburg (DE)
(74) Representative: Betten & Resch

(57) **Abstract**

A method for filtering a database by retrieving data records which are optimal according to a partial ordering O from the database comprising the steps of defining soft selection criteria, translating each soft criterion to a partial ordering O1, O2, respectively, to be performed on the database records, wherein the partial orderings include better-worse relationships, combining the partial orderings O1, O2 on the database records to the partial ordering O on the database records, and selecting the database records REC1 from the database such that there is no database record REC2 in the database that is better than the database record REC1 according to the partial ordering O, and assigning the selected database records to a set of optimal database records OPT. Further a system is provided on which the methods can be carried out, more particularly, a server/client system is provided.

## Description

### Field of the Invention

The present invention relates to a method and a system for database interrogation and manipulation and, more particularly, to methods and a system for retrieving database records that are optimal according to a strict partial ordering on the database records through a series of data accesses to the database.

### Background of the Invention

Search and matching components to select goods or services are important parts of electronic commerce systems, self service systems and electronic catalogs. The goods or services offered by the search and matching component should satisfy the preferences of the customer/user and of the seller/bidder as good as possible. Especially if a perfect match is not available, the search and matching component should automatically offer best possible alternatives.

Nowadays, electronic commerce, self service and electronic catalog systems are in most cases based on database systems such as relational (SQL) database systems. Through the integration of these systems with enterprise planning systems and with the rise of structured data exchange technologies like XML the data of these systems is getting more and more structured. Therefore there is a growing need for search and matching technologies that can handle structure-oriented data that have many properties.

The search and matching components for goods or services - available today - can be categorized as follows (combinations are possible):

The selection is based on the product number or any kind of identifier. In this case the user has to know exactly what s/he is looking for.

The selection is based on keywords occurring in the product name, description or other text fields. A disadvantage of this method is that the user has to be familiar with the keywords occurring in the database records. Furthermore additional properties like color, size, weight etc. are not used in this kind of selection.

The selection is based on a hierarchical structure of the database records. For example database records describing cars can be grouped according to their make in the first level and according to their model in the second level. The user first selects the preferred make and in a second step the preferred model. A disadvantage of this method is that the structuring of the database records means a lot of editing work to be done. Furthermore searching for criteria not reflected by the hierarchical structure (like selecting according to the color of the car) is not supported.

The selection is based on the properties of the goods or services like color, size, weight etc. and the selection treats all the selection criteria on the properties as hard conditions that must be satisfied simultaneously. A disadvantage of this method is that if the perfect goods or services are not available there are no offers made to the user. S/He has to modify her/his selection criteria in order to find any acceptable offer in the database which can take some time.

The selection is based on the properties of the goods or services but the search and matching strategy does not try to satisfy all the selection criteria simultaneously. Instead the selection criteria on the properties are applied one by one as hard selection conditions and the goods and services then still available are offered (parametric search). A disadvantage of this method is that if there are no more goods or services available at a certain step of the selection process or the user does not like the goods or services still available some selections have to be undone. Furthermore the result of the searching process is highly dependent on the order in which the selection criteria are applied.

The selection is based on the properties of the goods or services but the selection criteria are not treated as hard conditions on the properties. Instead the property values are combined by an evaluation function mapping them to a numerical value. This searching and matching strategy (in many cases it is only a ranking strategy) offers those goods or services whose numerical value is as close as possible to the numerical value of the perfect matches. A disadvantage of this method is that mapping database record to one numerical value blurs qualitative differences between the offered goods or services. The evaluation function is often not known to the user or not comprehensible. There is no or little data filtering.

These search and matching strategies described are either realized based on the underlying database system and its retrieval language (like SQL) or by the use of external index and access structures outside the database.

### Summary of the Invention

It would be desirable to have a search and matching strategy that does not treat the selection criteria as hard conditions but as preferences or "soft" conditions of the customer/user and seller/bidder. The values of the properties should not be mapped to one numerical value because that is blurring the qualitative differences. Instead there should be a strict partial ordering on the database records representing goods or services and the optimal goods or services according to this ordering should be offered. The partial ordering on the database records could be, for example, the combination of partial orderings on the property values of the goods or services such that the optimal offerings adhere to the well-known principle of Pareto-optimality. The partial orderings on the property values could then express likes and dislikes of the customer/user and seller/bidder.

The prior art has not disclosed the combination of partial orderings with databases and efficient methods or systems for computing the optimal offerings.

The present invention provides a method and a system for retrieving data records that are optimal according to a strict partial ordering on the database records through a series of data accesses to the database. Retrieving data records optimal according to a strict partial ordering acts as an adaptive filter on the database.

The retrieving process described can not only be applied to the whole database but also to the result of another retrieval process, thus acting as an additional filter of that retrieval process. If not only optimal database records are required but also database records that are worse than the optimal ones, then this can be done by excluding the optimal ones from the database when the retrieval process is performed. The retrieval of the optimal database records can be combined with any other selection (e.g., with hard selection criteria) on the database.

### To clarify the notions:

Strictly partially ordered means that there are "better - worse"-relationships between the database records such that for all records REC1, REC2 and REC3 the following is true:
REC1 is not better than itself,
if REC1 is better than REC 2, then REC2 is not better than REC1,
if REC1 is better than REC2 and REC2 is better than REC3, then REC1 is better than REC3, too.

The strict partial orderings refer to at least one database record field, i.e., they are defined by using the data values of these database record fields, e.g. an identifier field.

As a special case, the strict partial ordering is a total ordering, i.e., for all records REC1 and REC2 the following is true:
either REC1 is better than REC2 or REC2 is better than REC1 or they coincide for all database record fields the ordering is referring to.

The "better-worse"-relationships may be stored in the database.

The strict partial ordering may be empty.

The database the strict partial ordering is defined on does not have to be actually stored. It can also be computed from an actual stored database. This computation result may be actually stored or not.

The partial ordering on the database records may be expressed by a language extension of the retrieval language, e.g., by a language extension of the SQL language in the case of relational databases. A sample SQL language extension is Preference SQL by Database Preference Software GmbH, Augsburg, Germany.

The partial ordering on the database records may be the result of combining several partial orderings on the database records.

An important combination of strict partial orderings is cumulation (also called cartesian product). A database record REC1 is better than a database record REC2 according to the cumulation if:
for at least one strict partial ordering REC1 is better than REC2 according to this ordering,
for the strict partial orderings according to which REC1 is not better than REC2, REC1 and REC2 coincide in the database record fields these orderings refer to.
Cumulation expresses that there is no priority between the partial orderings. Cumulation is associative, i.e., the cumulation of a strict partial ordering O1 with the cumulation of strict partial orderings O2 and O3 is the same as the cumulation of the cumulation of O1 and O2 with O3.

Other important combinations of strict partial orderings are:
the intersection, i.e., a database record is better if it is better according to all the partial orderings;
in some cases the union of the orderings, i.e., a partial ordering is better if it is better according to one of the partial orderings (for example the union of strict partial orderings is a strict partial ordering if the sets of database records, the orderings are referring to, are disjoint);
the lexicographic combination O of two strict partial orderings O1 and O2 on the database records: A database record REC1 is better than a database record REC2 according to O if REC1 is better than REC2 according to O1 or if REC1 and REC2 coincide in the database record fields O1 is referring to and REC1 is better than REC2 according to O2. The lexicographic combination expresses an priority of O1 over O2. It can also be expressed as union of O1 and the cumulation of an empty ordering on the database record fields O1 is referring to and O2.

A database record is optimal according to the given strict partial ordering if there is no better database record. In the case of cumulation, the optimal database records adhere to the principle of Pareto-optimality. For a total ordering all optimal database records coincide in the database record fields the ordering is referring to. They are called maximal.

An optimal database record may be adorned by a quality profile expressing how good the record is according to the strict partial ordering on the database records. In the case that the strict partial ordering is the result of combining several partial orderings then the quality profile may be composed from the quality profiles of the singular orderings. The quality profile may be added to the database record as new database record fields.

### Method 1 (selection method)

for retrieving the optimal database records from a database D according to a strict partial ordering O works as follows:
1.1. *at the start the set of optimal database records* OPT *is empty.*
1.2. *select a database record* REC1 *from the database* D.
1.3. *insert* REC1 *into* OPT *if there is no database record* REC2 *in database* D *that is better than* REC1.
1.4. *repeat steps 1.2 through 1.3 until all database records* REC1 *from database* D *have been selected.*
1.5. *the method is finished.* OPT *contains the optimal database records from database* D *according to* O.

This method may be realized by one or more retrieval language statements, especially SQL statements including SQL statements with NOT EXISTS-subqueries or uses of MIN and MAX functions if the database is a relational database. This method may also be realized by data accesses using internal data access interfaces of a database system like an interface to the B-trees or other storage structures of a database system. The method may also use (special) index structures that support the check whether there is a better database record to a given one. Major advantages of the selection method are:

The implementation of this method is straightforward and if the database is a relational database then it can be realized in way that is independent of the SQL variant offered by the database.

The method can be implemented by very few statements of the retrieval language. In SQL in can even be implemented by one SQL statement. If a database record is inserted into OPT then it is indeed an optimal database record according to O. It can already be processed, e.g., displayed.

The selection method is especially appropriate for applications that have to be portable, i.e., that should be implemented on many different database systems.

### Method 2 (bottom up method)

for retrieving the optimal database records from a database D according to a strict partial ordering O on the database records works as follows:
2.1. *at the start the set of database records* OPT *is empty.*
2.2. *select a database record* REC1 *from the database* D.
2.3. *insert* REC1 *into* OPT *if there is no database record* REC2 *in* OPT *that is better than* REC1.
*2.4. delete all database records* REC3 *from the* set OPT *that are worse than* REC1.
2.5. *repeat steps 2.2 through 2.4 until all database records* REC1 from a database D *are selected.*
2.6. *the method is finished.* OPT now *contains the optimal database records from database* D *according to* O.

This method may be realized by retrieval language statements, especially SQL statements including procedural extensions of SQL like WHILE-loops or by using Embedded SQL or other combinations of SQL with programming languages. This method may also be realized by data accesses using internal data access interfaces of a database systems like an interface to the B-trees or other storage structures of a database system. The method may also use (special) index structures that support the check whether there is a better database record to a given one. It is important to understand that the set of database records OPT may contain database records that are not optimal until the method is finished.

### Major advantages of the bottom up method are:

The intermediate result of this method is always smaller than the final result set.

The method can be implemented very efficiently by manufacturers of database systems as they can realize the iteration and the storage of OPT very efficiently.

The bottom up method is especially appropriate for applications where each database record of the database has to be processed anyhow.

### METHOD 3 (intersection method)

for retrieving the optimal database records from a database D is applicable if the union O of two strict partial orderings O1 and O2 on the database records is indeed a partial ordering on the database records.
3.1. *compute the set* OPTAUX1 *of optimal database records according to* O1.
3.2. *compute the set* OPTAUX2 *of optimal database records according to* O2.
3.3. *Insert into* OPT *only such database records* of OPTAUX2 also *occurring in* OPTAUX1.
3.4. *the method is finished.* OPT *contains the optimal database records from database* D *according to* O.

This method may be realized by retrieval language statements, especially SQL statements This method may also be realized by data accesses using internal data access interfaces of a database systems like an interface to the B-trees or other storage structures of a database system.

The intersection method is used in this patent application as an auxiliary method for the optimization of the lexicographic combination of partial orderings.

### METHOD 4 (cumulation with empty ordering method)

for retrieving the optimal database records from a database D is applicable if the strict partial ordering O on the database records is the result of the cumulation of an empty strict partial ordering O1 on some database record fields and a strict partial ordering O2.
4.1. *at the start the set of optimal database records* OPT *is empty.*
4.2. *partition the database* D *into subsets such that any two records* REC1 *and* REC2 *in the same subset coincide in the database record fields* O1 *refers to.*
4.3. *select such a subset* G.
*4.4. compute the set* OPTG *of optimal records from set* G *according to* O2 *and copy the records from* OPTG *into* OPT.
4.5. *repeat steps 4.3 through 4.4 until all subsets* G *have been selected.*
4.6. *the method is finished.* OPT *contains the optimal database records from database* D *according to* O.

Cumulation with an empty ordering computes the optimal database records according to O2 within each group of database records that coincide in the database record fields O1 is referring to. The optimal database records OPTG of a group G can be computed by any method and may be realized by retrieval language statements, especially SQL statements including procedural extensions of SQL like WHILE-loops or by using Embedded SQL or other combinations of SQL with programming languages. The SQL statements may use the GROUP BY clause. This method may also be realized by data accesses using internal data access interfaces of a database systems like an interface to the B-trees or other storage structures of a database system.

The cumulation with empty ordering method is used in this patent application as an auxiliary method for the optimization of the lexicographic combination of partial orderings.

### METHOD 5 (iterative method)

for retrieving the optimal database records from a database D is applicable if the strict partial ordering O on the database records is the result of the cumulation of two strict partial orderings O1 and O2. Let OAUX be the lexicographic combination of O1 and O2.
5.1. *at the start the set of optimal database records* OPT *is empty.*
5.2. *compute* DAUX as *the set of all database records* REC1 *from database* D *such that there is no database record* REC2 *in* OPT *coinciding with* REC1 *in the database record fields* O *is referring to or* that is *better than* REC1 *according to* O.
5.3. *compute the set* OPTAUX *of database records from* DAUX *that are optimal according to* OAUX.
5.4. *copy the database records from* OPTAUX *into* OPT.
5.5. *repeat steps 5.2. through 5.4. until* OPTAUX *is empty.*
5.6. *the method is finished.* OPT *contains the optimal database records from database* D *according to* O.

This method may be realized by retrieval language statements, especially SQL statements including procedural extensions of SQL like WHILE-loops or by using Embedded SQL or other combinations of SQL with programming languages. This method may also be realized by data accesses using internal data access interfaces of a database systems like an interface to the B-trees or other storage structures of a database system. As OAUX is the lexicographic combination of O1 and O2, it can be expressed as the union of O1 and the partial ordering that is the cumulation of an empty strict partial ordering on the database record fields O1 is referring to and O2. The optimal database records according to OAUX may therefore be computed by the application of the intersection method and of the cumulation-with-empty-ordering method. By doing this the computation of the optimal database records according to O can be reduced to the computation of the optimal database records according to O1 and the computation of the optimal database records according to O2 (with grouping). As the cumulation is associative the described method can easily be extended to more than two orderings.

Major advantages of the iterative method are, if the optimal database records according to O are optimal according to the partial orderings O1 and O2, too (i.e., if all soft conditions can be satisfied), then the computation of OPT stops after the second iteration pass, and if OPT contains all database records of the database (i.e., no soft condition can be satisfied) , then the computation of OPT stops after the second iteration pass, too.

The iteration method yields additional optimal database records in every iteration pass. First optimal database records are therefore available fast in many cases of practical relevance. These optimal database records can already be processed, e.g., displayed. The intermediate result is always smaller than the final result.

The iterative method is especially appropriate for applications like online processing where it is important to get the first (and then the next) results fast .

### METHOD 6 (iterative method with total ordering)

for retrieving the optimal database records from a database D is applicable if the strict partial ordering O on the database records is the result of the cumulation of a total ordering O1 and a strict partial ordering O2. F1 are the database record fields O1 is referring to, F2 are the database record fields O2 is referring to.
6.1. *at the start the set of database records* OPT *is empty.* MAX *is a one-element set containing an arbitrary database record* MAXREC *that is better than the maximal database records from database* D *according to* O1.
6.2. *replace* MAXREC *with an arbitrary maximal database record according to* O1 *from the set of database records* REC1 *that are worse than the current* MAXREC *according to* O1 *and such that there is no database record* REC2 *from* OPT *that is better than* REC1 *according to O2 or coinciding with* REC1 *in* F2.
6.3. *compute the set of database records* OPTAUX *that are optimal according to* O2 *from the set of database records* REC1 *that coincide with* MAXREC *in* F1 *and such that there is no* database *record* REC2 from OPT *that is better than* REC1 *according to* O2 *or coinciding with* REC1 *in* F2.
6.4. *copy the database records from* OPTAUX *into* OPT.
6.5. *repeat* steps *6.2.through 6.4. until* OPTAUX *is empty.*
6.6. *the method is finished.* OPT *contains the optimal database records from database* D *according to* O.

This method is a special case of the iterative method. It may be realized by retrieval language statements, especially SQL statements including procedural extensions of SQL like WHILE-loops or by using Embedded SQL or other combinations of SQL with programming languages. This method may also be realized by data accesses using internal data access interfaces of a database systems like an interface to the B-trees or other storage structures of a database system. As the cumulation is associative the described method can easily be extended to more than two orderings.

Major advantages of the iterative method are, if the optimal database records according to O are optimal according to the partial orderings O1 and O2, too (i.e., if all soft conditions can be satisfied), then the computation of OPT stops after the second iteration pass, and if OPT contains all database records of the database (i.e., no soft condition can be satisfied) , then the computation of OPT stops after the second iteration pass, too.

The iteration method yields additional optimal database records in every iteration pass. First optimal database records are therefore available fast in many cases of practical relevance. These optimal database records can already be processed, e.g., displayed. The intermediate result is always smaller than the final result.

By using indexes like B-trees or other storage structures the iterative method with total ordering can be applied to very large databases. It is possible to compute the optimal database records in fewer computation steps than the number of database records of the database (i.e., the method is sub-linear in many cases of practical relevance).

The iterative method with total ordering is especially appropriate for applications like online processing where it is important to get the first (and then the next) results fast .

### Brief Description of the Drawings

The present invention, its features, applications and advantages will become more understandable from preferred embodiments of the invention by referring to the accompanying drawings.

Figure 1 is a logic diagram of Method 1 to retrieve the optimal database records according to a strict partial ordering from a database

Figure 2 is a logic diagram of Method 2 to retrieve the optimal database records according to a strict partial ordering from a database.

Figure 3 is a logic diagram of Method 3 to retrieve the optimal database records according to a strict partial ordering from a database.

Figure 4 is a logic diagram of Method 4 to retrieve the optimal database records according to a strict partial ordering from a database.

Figure 5 is a logic diagram of Method 5 to retrieve the optimal database records according to a strict partial ordering from a database.

Figure 6 is a logic diagram of Method 6 to retrieve the optimal database records according to a strict partial ordering from a database.

Figure 7 is a block diagram illustrating a system on which the methods according to embodiments of the present invention are performed.

### Detailed Description of the Invention

In the following the methods to compute the optimal database records according to a strict partial ordering will be demonstrated in detail by examples in a shopping scenario. One particular procedure is the following (wherein in the general procedure the user may define partial orderings directly):
■ The users (like customers, sellers or even applications) state their preferences. This may be done by filling in a search mask of a Internet or a client-server application.
■ The user preferences are (automatically) mapped to partial orderings on the database records of the database. These partial orderings will act as filters or soft selection criteria. Examples for those mappings are:
■ the user preference to buy a yellow car is mapped to the partial ordering that database records with Color = yellow are better than all other database records
■ the user preference to buy a yellow car and if this is not possible to buy a red car is mapped to the partial ordering that database records with Color = yellow are better than database records with Color = red and that those are better than all the remaining database records. Often the user preferences are not mapped to partial orderings on the database itself but to partial orderings on a auxiliary database that is computed by first applying a function to the database. An example for such a case is the user preference to buy a car for 50000. The database is mapped to an auxiliary database by extending it by an additional column that contains the absolute value of the difference of the price and 50000. The user preference is then mapped to the total ordering on this auxiliary database. A database record better than another one if the data value of the new column is smaller.
■ The partial orderings are combined to one resulting ordering that acts like a over-all filter. This can be accomplished by combining the partial orderings by cumulation or lexicographic combination.
■ This over-all filter is applied to the database. This is accomplished by computing the optimal database records according to the over-all filter.
■ The resulting database records are returned to the user. They may be adorned by information telling the user which preferences could be satisfied or not.

### Method 1 (selection method)

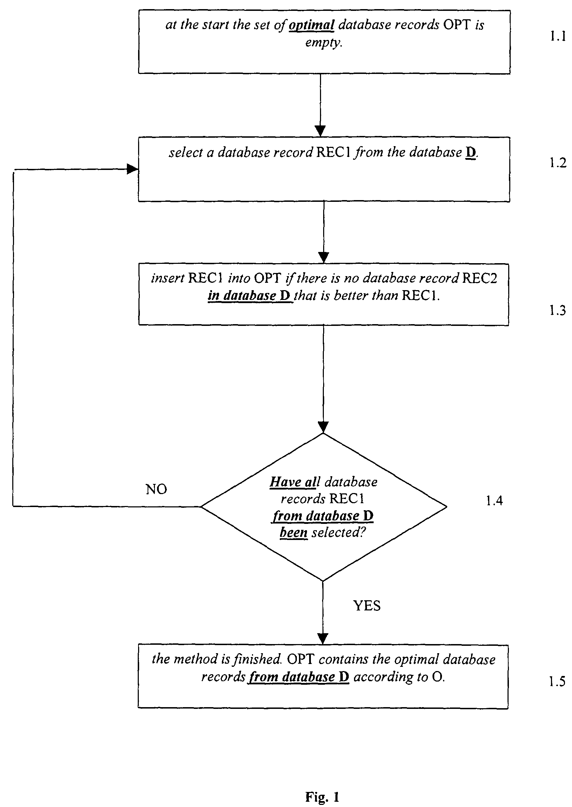

The following explanations are with respect to Fig.1 which depicts a flowchart of method 1. Method 1 is a preferred embodiment of the present invention. Assuming, for example, the database D1 consists of the following database records representing cars (each row of the table represents one database record, the columns are the database record fields):

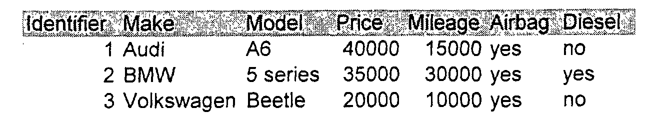

### Shopping scenario:

*The customer wants to buy a car. S*/*He wants an Audi and a car with Diesel engine*. *S/He does not prioritize one of these two selection criteria over the other one.*

Treating these two selection criteria as hard conditions ("select all Diesel Audis") would result in no offers. Instead these two selection criteria are treated as soft conditions by defining partial orderings on the database and computing the optimal database records according to the cumulation of the orderings.

First an auxiliary database D2 is computed from database D1. D1 is extended by two new computed database record fields Makelevel and Diesellevel. Makelevel is set to 1 if Make = Audi else it is set to 2. Diesellevel is set to 1 if Diesel = yes else it is set to 2. This means that the satisfaction of a selection criteria is translated into the numerical value 1, the non-satisfaction is translated into the numerical value 2. Makelevel and Diesellevel could be used as a quality profile of the database records.

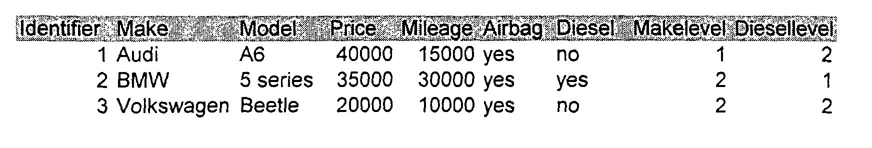

The computed database D2 can be implemented by statements of the retrieval language of the database system. Throughout the example a relational database systems with the retrieval language SQL is assumed. Then D2 could be expressed by the following SQL statement: 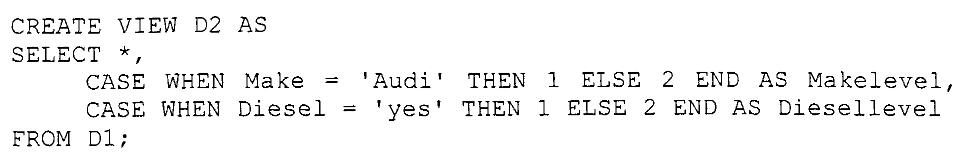 On D2 two total orderings O1 and O2 are defined:
■ (O1) A database record REC1 is better than a database record REC2 if the Makelevel data value of REC1 is less than the Makelevel data value of REC2.
■ (O2) A database record REC1 is better than a database record REC2 if the Diesellevel data value of REC1 is less than the Diesellevel data value of REC2.

The two partial orderings O1 and O2 are combined by cumulation resulting in the strict partial ordering O on the database D2. The cumulation expresses that the customer does not prioritize one of the selection criteria. According to O a database record REC1 is better than a database record REC2 if REC1 is better than REC2 according to at least one of the orderings O1 and O2; if REC1 is better than REC2 according to only one of these orderings then REC1 and REC2 have to coincide in the database record field the other ordering is referring to. O1 is referring to the database record field Makelevel and O2 is referring to the database record field Diesellevel. For example let REC1 be the database record with Identifier = 1 and REC2 be the database record with Identifier = 3. REC1 is better than REC2 according to O: Makelevel = 1 for REC1 and Makelevel = 2 for REC2. Therefore REC1 is better than REC2 according to O1. Diesellevel = 2 for REC1 and Diesellevel = 2 for REC2. Therefore REC1 and REC2 coincide in Diesellevel.

In SQL the selection method could be implemented by the following statements (using the D2 database defined above):
-- Step 1.1: 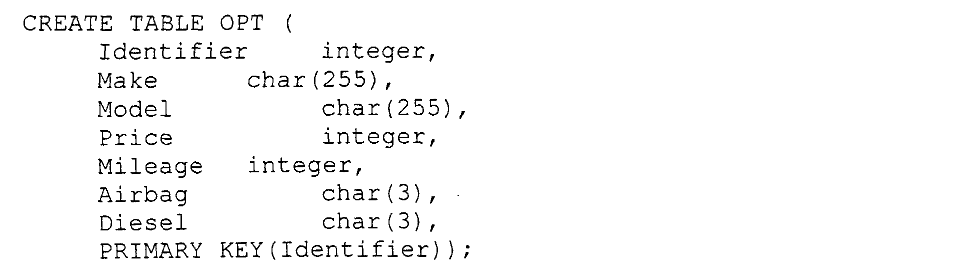
-- Step 1.2 - Step 1.5:

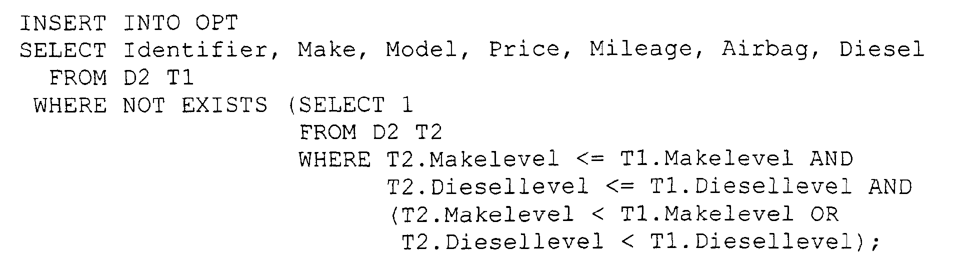

As described in Method 1 and shown in Fig.1 at the beginning the set OPT is empty. The INSERT INTO ... SELECT ... FROM ... WHERE SQL-statement inserts database records REC1 into OPT if there are no database records REC2 that are better than REC1 according to O. This is expressed by the sub-query NOT EXISTS . After the execution of the SQL statements OPT contains the optimal database records of the database D according to the strict partial ordering O. Since the database record with Identifier = 3 is worse than the database records with Identifier = 1 and Identifier = 2 the resulting database records are:

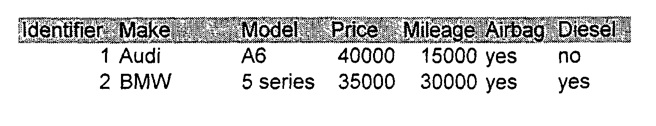

Although the perfect matches of the customer's preferences are not available, the best possible alternatives are offered: an Audi and a Diesel car.

### Method 2 (bottom up method)

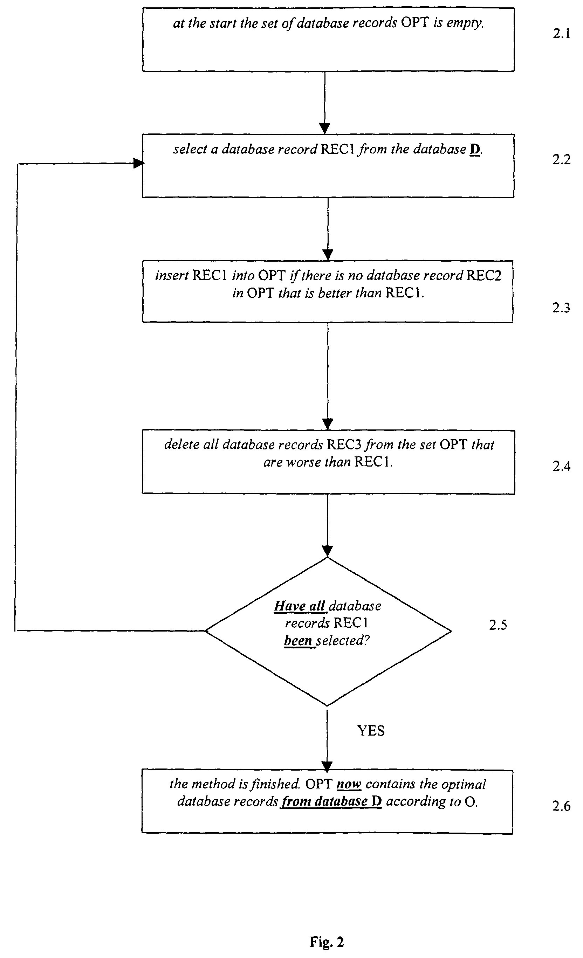

The following explanations are with respect to Fig.2 which depicts a flowchart of method 2 according to another embodiment of the present invention. For example, the database D1 consists of the following database records representing cars (each row of the table represents one database record, the columns are the database record fields):

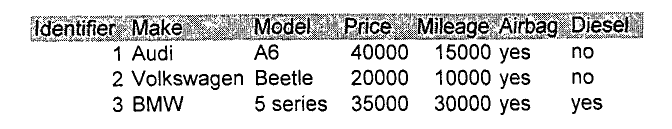

### Shopping scenario:

*The customer wants to buy a car. S*/*He wants a Beetle and a car with a mileage less or equal 25000. S*/*He does not prioritize one of these two selection criteria over the other one.*

In this case, treating the two selection criteria as hard conditions ("select all Beetles with mileage less or equal 25000") would result in offering the database record with Identifier = 2. Again these two selection criteria are treated as soft conditions by defining partial orderings on the database and computing the optimal database records according to the cumulation of the orderings.

First an auxiliary database D2 is computed from database D1. D1 is extended by two new computed database record fields Modellevel and Mileagelevel. Modellevel is set to 1 if Model = Beetle else it is set to 2. Mileagelevel is set to 0 if Mileage ≤ 25000 else it is set to Mileage - 25000. This means that the satisfaction of the selection criterion on Model is translated into the numerical value 1, the non-satisfaction is translated into the numerical value 2 and that the satisfaction of the selection criterion on Mileage is translated to 0 and the non-satisfaction is translated into the distance of the actual Mileage data value from the preferred one. Makelevel and Mileagelevel could be used as a quality profile of the database records.

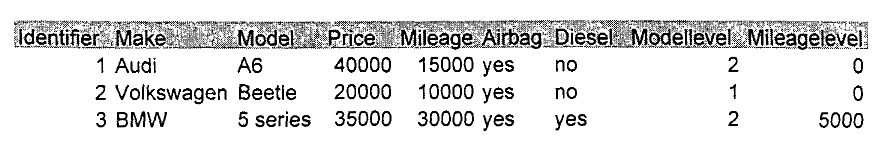

The computed database D2 can be implemented by statements of the retrieval language of the database system. Throughout the example, a relational database systems with the retrieval language SQL is assumed. Then D2 could be expressed by the following SQL statement: 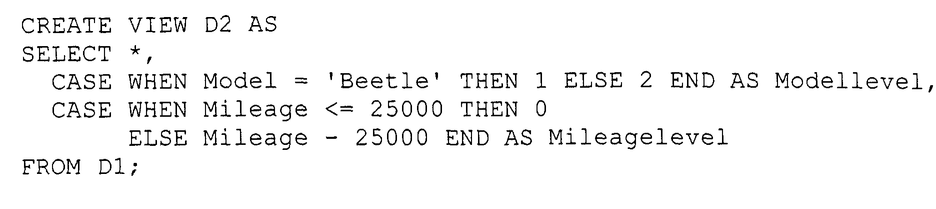 On D2 two total orderings O1 and O2 are defined:
■ (O1) A database record REC1 is better than a database record REC2 if the Modellevel data value of REC1 is less than the Modellevel data value of REC2.
■ (O2) A database record REC1 is better than a database record REC2 if the Mileagelevel data value of REC1 is less than the Mileagelevel data value of REC2.

The two partial orderings O1 and O2 are combined by cumulation resulting in the strict partial ordering O on the database D2. According to O a database record REC1 is better than a database record REC2 if REC1 is better than REC2 according to at least one of the orderings O1 and O2; if REC1 is better than REC2 according to only one of these orderings then REC1 and REC2 have to coincide in the database record field the other ordering is referring to. O1 is referring to the database record field Modellevel and O2 is referring to the database record field Mileagelevel. For example let REC1 be the database record with Identifier = 2 and REC2 be the database record with Identifier = 1. REC1 is better than REC2 according to O: Modellevel = 1 for REC1 and Modellevel = 2 for REC2. Therefore REC1 is better than REC2 according to O1. Mileagelevel = 0 for REC1 and Mileagelevel = 0 for REC2. Therefore REC1 and REC2 coincide in the Mileagelevel field.

### Step 2.1:

At the start the set of database records OPT is empty. With SQL this can be expressed by

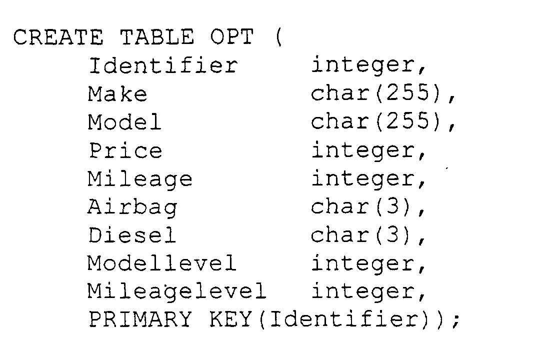

### Step 2.2:

The database record REC1 with Identifier = 1 is selected from the database D2.

### Step 2.3:

As OPT is empty, there is no database record REC2 in OPT that is better than REC1 according to O. The following query checks if REC1 is outperformed by any OPT database record.

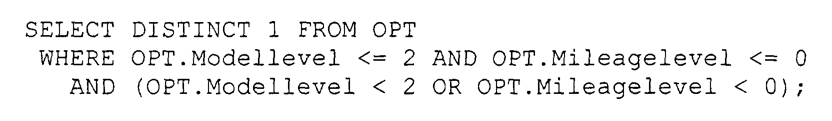

This query returns no result, therefore REC1 is inserted into OPT. With SQL this can be expressed by

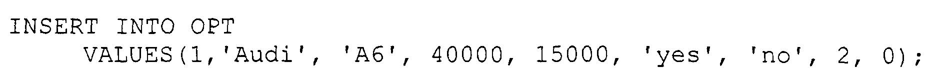

### Step 2.4:

All the database records REC3 are deleted from OPT that are worse than REC1. With SQL this can be expressed by

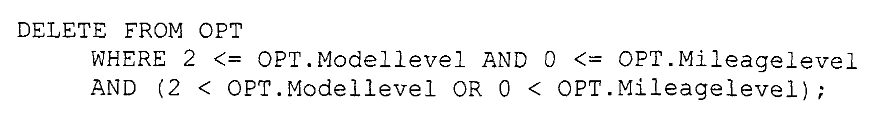

Nothing is deleted from OPT in this case. OPT contains the following database records

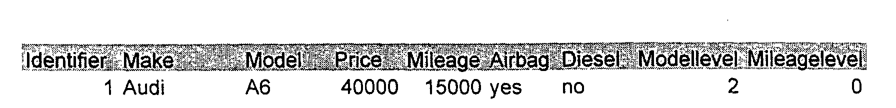

### Step 2.5:

There are still database records that have not been selected. Therefore Steps 2.2 through 2.4 are repeated.

### Step 2.2:

The database record REC1 with Identifier = 2 is selected from the database D2.

### Step 2.3:

There is no database record REC2 in OPT that is better than REC1 according to O. This is checked with the following query:

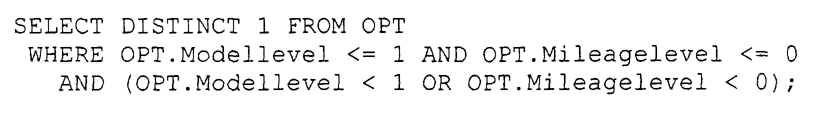

The query returns no database record, thus REC1 is inserted into OPT. OPT contains the following database records

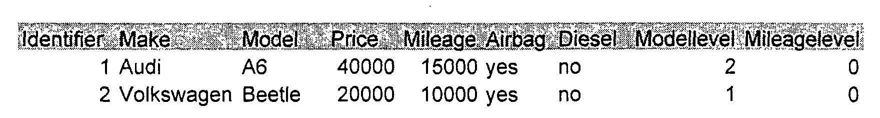

### Step 2.4

All the database records REC3 are deleted from OPT that are worse than REC1 using:

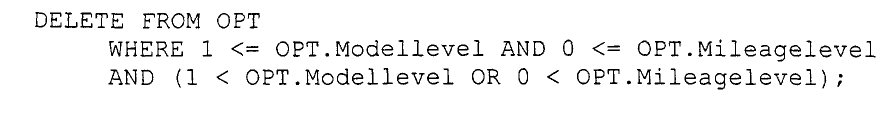

The database record with Identifier = 1 in OPT is worse than REC1. Therefore it is deleted from OPT. OPT now contains the following database records

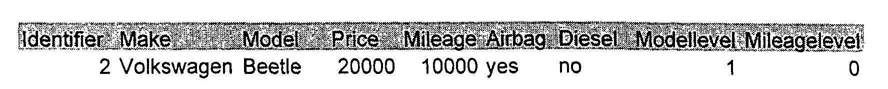

### Step 2.5:

There are still database records that have not been selected. Therefore Steps 2.2 through 2.4 are repeated.

### Step 2.2:

The database record REC1 with Identifier = 3 is selected from the database D2.

### Step 2.3:

There is a database record REC2 in OPT that is better than REC1 according to O, because the following query returns a database record:

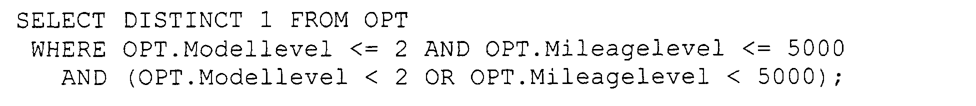

Therefore REC1 is not inserted into OPT.

### Step 2.4

Since the previous step revealed that no database record in OPT is worse than REC1 nothing needs to be done in this step. The content of OPT remains the same.

### Step 2.5:

There are no more database records that have not been selected.

### Step 2.6

The method is finished. The set OPT contains the optimal database records according to O. The database record fields not occurring in the database D1 are suppressed.

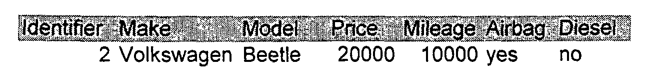

In this case treating the selection criteria as partial orderings yields the same result as treating them as hard selection criteria.

### METHOD 3 (intersection method)

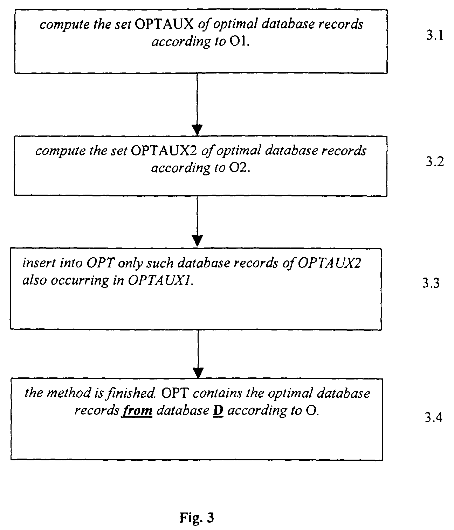

Method 3, which is a still further embodiment of the present invention, will be illustrated with reference to Fig. 3, showing a flowchart thereof. For example, the database D1 consists of the following database records representing cars (each row of the table represents one database record, the columns are the database record fields):

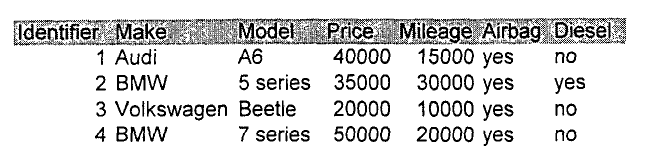

The intersection method is only used as an auxiliary method for the iteration method.

On the database D1 two strict partial orderings are defined:
(O1) The database record with Identifier = 1 is better than the database record with Identifier = 2
(O2) The Database record with Identifier = 3 is better than the database record with Identifier = 4.

The union O of these two orderings is itself a strict partial ordering. The optimal database records according to O can be computed as follows

### Step 3.1:

The set OPTAUX1 of optimal database records according to the ordering O1 among the database D1 is computed. This can be done, e.g., by the selection method or the bottom-up method:

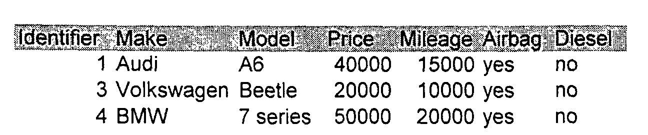

### Step 3.2:

The set OPTAUX2 of optimal database records according to the ordering O2 among the database D1 is computed. This can be done, e.g., by the selection method or the bottom-up method:

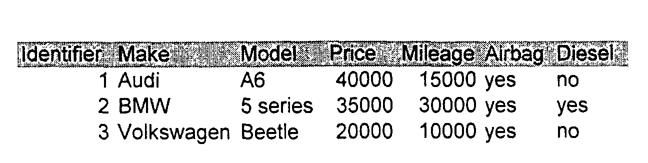

### Step 3.3:

The database records occurring in both OPTAUX1 and OPTAUX2 are inserted into OPT.

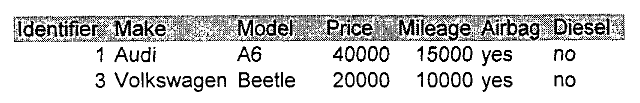

### Step 3.4:

The method is finished. OPT contains the optimal database records of D1 according to O.

### METHOD 4 (cumulation with empty ordering method)

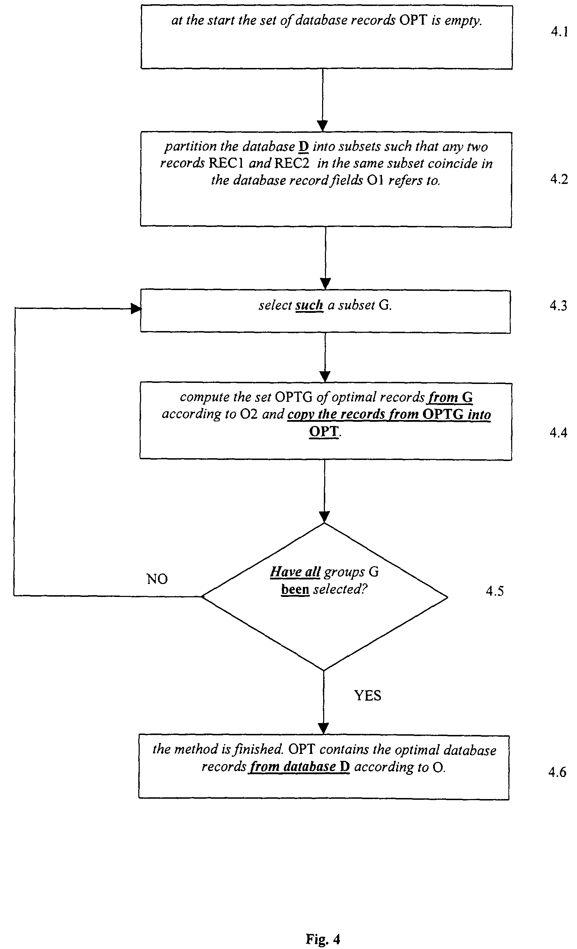

Fig. 4 shows a flowchart of method 4 which is also a further embodiment of the present invention, wherein the followings explanations are referring thereto. For example, the database D1 consists of the following database records representing cars (each row of the table represents one database record, the columns are the database record fields):

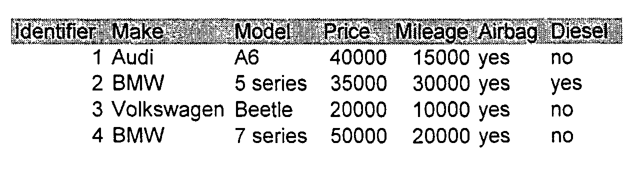

### Shopping scenario:

*The customer wants to know for each make the cars with a price as close to 40000 as possible.*

First an auxiliary database D2 is computed from database D1. D1 is extended by the new computed database record field Pricelevel. Pricelevel is set to the absolute value of Price - 40000. This means that the selection criterion "as close to 40000 as possible" is translated to the absolute value of the difference of the price and the preferred value 40000.

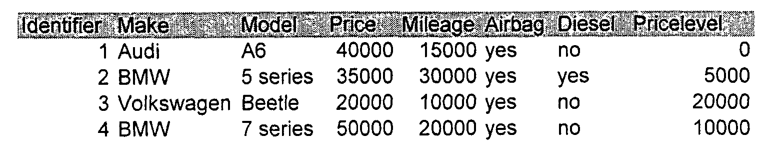

The computed database D2 can be implemented by statements of the retrieval language of the database system. Throughout the example a relational database systems with the retrieval language SQL is assumed. Then D2 can be expressed by the following SQL statement: 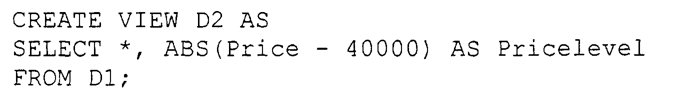 On the database D2 a strict partial and a total ordering are defined:
(O1) The empty ordering referring to the database record field Make.
(O2) A database record REC1 is better than a database record REC2 if the Pricelevel data value of REC1 is less than the Pricelevel data value of REC2.

The two partial orderings O1 and O2 are combined by cumulation resulting in the strict partial ordering O on the database D2. According to O a database record REC1 is better than a database record REC2 if REC1 is better than REC2 according to O2 (it must be O2 as O1 is empty) and if REC1 and REC2 coincide in the database record field Make. For example let REC1 be the database record with Identifier = 2 and REC2 be the database record with Identifier = 4. REC1 is better than REC2 according to O: Pricelevel = 5000 for REC1 and Pricelevel = 10000 for REC2. Therefore REC1 is better than REC2 according to O2. Make = BMW for REC1 and Make = BMW for REC2. Therefore REC1 and REC2 coincide in the data values of Make.

By computing the optimal database records according to O, the cars with Price as close as possible to 40000 are computed for each group of cars that coincide in their make.

### Step 4.1:

At the start the set of database records OPT is empty. With SQL this can be expressed by

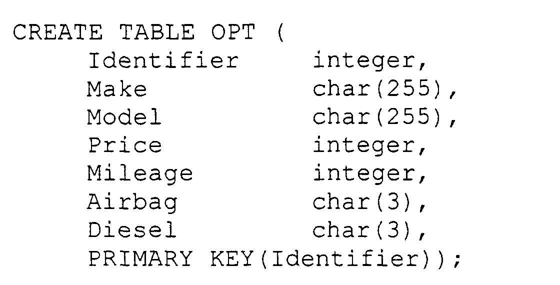

### Step 4.2:

The database D2 is partitioned into subsets such that any two records REC1 and REC2 in the same group coincide in Make. With SQL this can be expressed by 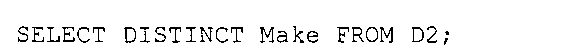 and for each resulting Make data value M

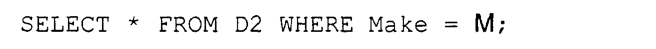

The resulting subsets are

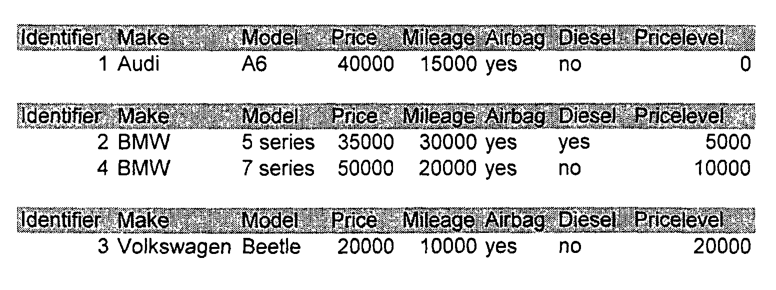

### Step 4.3:

The subset G with Make = Audi is selected.

### Step 4.4:

The set OPTG of optimal database records according to O2 among the database records in G is computed. This can be done by any method including the selection method or the bottom-up method. The records in OPTG are inserted into OPT (only the database record fields occurring in D1). Since O2 is a total ordering, there are maximal database records according to O2. They are the database records with minimal Pricelevel data value. Thus, as an optimization, OPTG can be computed by the following SQL statement:

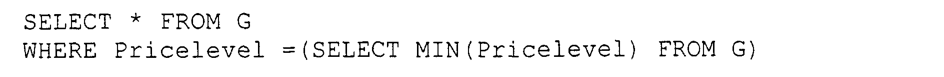

After inserting the maximal records into OPT, OPT contains the following database records (neglecting Pricelevel)

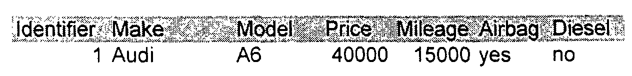

### Step 4.5:

There are still subsets that have not yet been selected. Therefore Steps 4.2 through 4.5 are repeated.

### Step 4.3:

The subset G with Make = BMW is selected.

### Step 4.4:

OPTG can be computed by the same SQL statement as above. After inserting the maximal records into OPT (neglecting Pricelevel), OPT contains the following database records

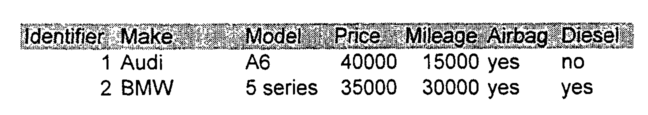

### Step 4.5:

There are still subsets that have not yet been selected. Therefore Steps 4.2 through 4.5 are repeated.

### Step 4.3:

The subset G with Make = Volkswagen is selected.

### Step 4.4:

OPTG can be computed by the same SQL statement as above. After inserting the maximal records into OPT (neglecting Pricelevel), OPT contains the following database records

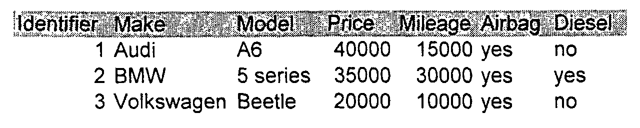

### Step 4.5:

There are no more subset that have not yet been selected.

### Step 4.6

The method is finished. OPT contains the optimal database records according to O.

### METHOD 5 (iterative method)

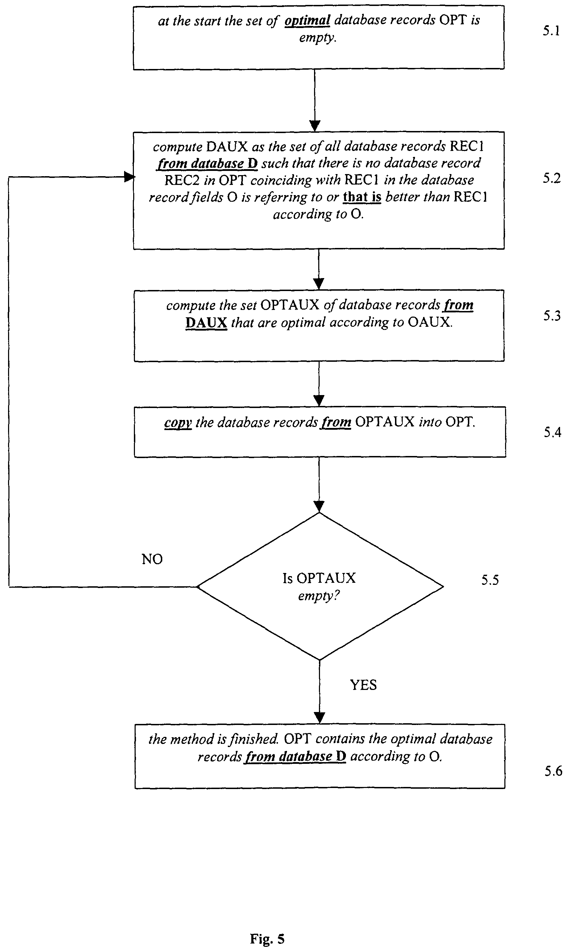

Fig. 5 shows a flowchart according to method 5 which is another further preferred embodiment of the present invention. For example, the database D1 consists of the following database records representing cars (each row of the table represents one database record, the columns are the database record fields):

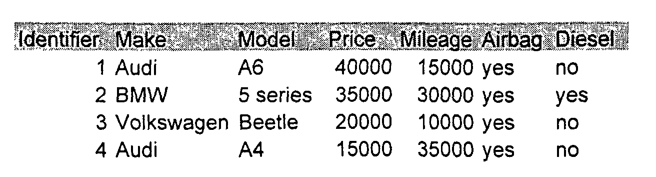

### Shopping scenario:

*The customer wants to buy a car with as little mileage as possible and as cheap as possible. S*/*He does not prioritize one selection criterion over the other one.*

These selection criteria are realized by two total orderings on the database record fields Mileage and Price and by computing the optimal database records according to cumulation of these orderings.

On the database D1 the following two total orderings are defined:
(O1) A database record REC1 is better than a database record REC2 if the Price data value of REC1 is lower than the Price data value of REC2.
(O2) A database record REC1 is better than a database record REC2 if the Mileage data value of REC1 is lower than the Mileage data value of REC2.

The two partial orderings O1 and O2 are combined by cumulation resulting in the strict partial ordering O on the database D1. According to O a database record REC1 is better than a database record REC2 if REC1 is better than REC2 according to at least one of the orderings O1 and O2; if REC1 is better than REC2 according to only one of these orderings then REC1 and REC2 have to coincide in the database record field the other ordering is referring to. O1 is referring to the database record field Price and O2 is referring to the database record field Mileage. For example let REC1 be the database record with Identifier = 3 and REC2 be the database record with Identifier = 2. REC1 is better than REC2 according to O: Price = 20000 for REC1 and Price = 35000 for REC2. Therefore REC1 is better than REC2 according to O1. Mileage = 10000 for REC1 and Mileage = 30000 for REC2. Therefore REC1 is better than REC2 according to O2. O1 is referring to the database record field Price, O2 is referring to the database record field Mileage.

The strict partial ordering OAUX is the lexicographic combination of O1 and O2.

Throughout this example we assume that the database system is a relational database system and that the iteration method is implemented by statements of the retrieval language SQL.

### Step 5.1:

At the start the set of database records OPT is empty. With SQL this can be expressed by

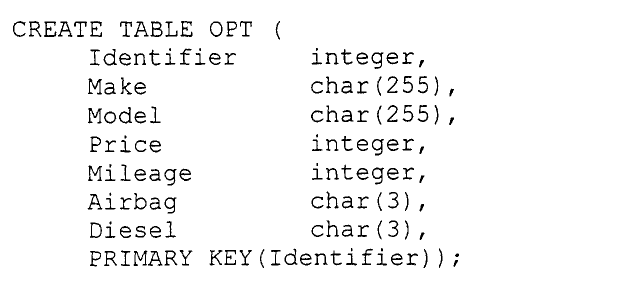

The auxiliary database record sets DAUX and OPTAUX are defined by analogous statements.

### Step 5.2:

The auxiliary database DAUX of all database records REC1 from database D1 such that there is no database record REC2 within OPT such that REC1 and REC2 coincide in the database record fields Price and Mileage or REC2 is better than REC1 according to O, can be computed by the following SQL statement:

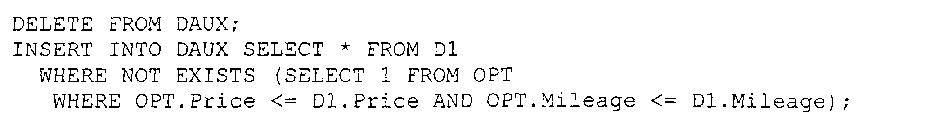

As OPT is empty, all database records from D1 are inserted into DAUX. DAUX contains the following database records:

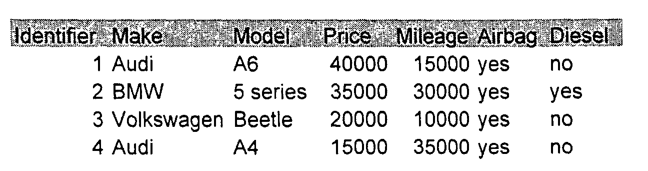

### Step 5.3:

The optimal database records OPTAUX according to the lexicographic combination OAUX of O1 and O2 are computed from DAUX. This can be done by applying the intersection method and the cumulation with empty ordering method. As a result of applying these two methods OPTAUX contains the following database record:

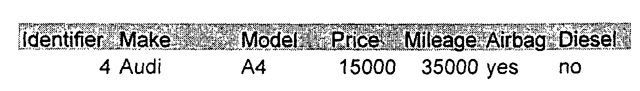

### Step 5.4:

The database records of OPTAUX are inserted into OPT. OPT contains the following database record:

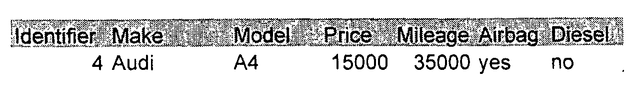

### Step 5.5:

As OPTAUX is not empty, Steps 5.2 through 5.4 are repeated.

### Step 5.2:

The set DAUX is computed by the same SQL statement as above. DAUX contains the following database records:

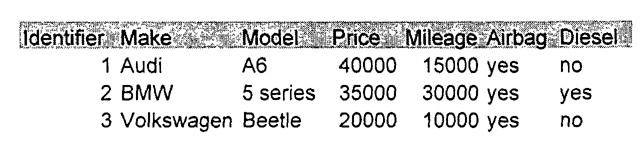

### Step 5.3:

The optimal database records OPTAUX according to the strict partial ordering OAUX are computed from DAUX. OPTAUX contains the following database record:

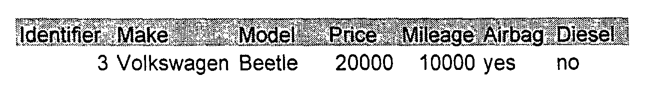

### Step 5.4:

The database records of OPTAUX are inserted into OPT. OPT contains the following database record:

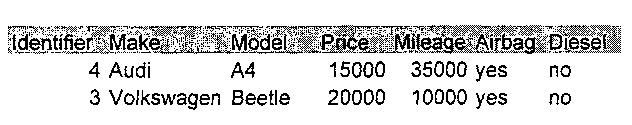

### Step 5.5:

As OPTAUX is not empty, Steps 5.2 through 5.4 are repeated.

### Step 5.2:

The set DAUX is computed by the same SQL statement as above. DAUX is empty.

### Step 5.3:

The optimal database records OPTAUX according to the strict partial ordering OAUX are computed from DAUX. As DAUX is empty, OPTAUX is empty, too.

### Step 5.4:

As OPTAUX is empty, no database records are inserted into OPT. OPT now contains the following database records:

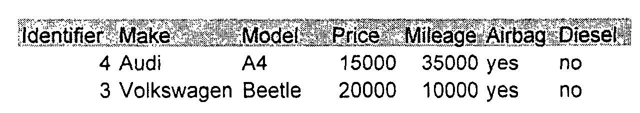

### Step 5.5:

As OPTAUX is empty, Steps 5.2 through 5.4 are not repeated anymore.

### Step 5.6:

The method is finished. OPT contains the optimal database records from database D1 according to O:

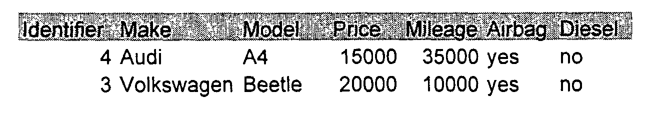

As result the car with minimal price and the car with minimal mileage are offered.

### METHOD 6 (iterative method with total ordering)

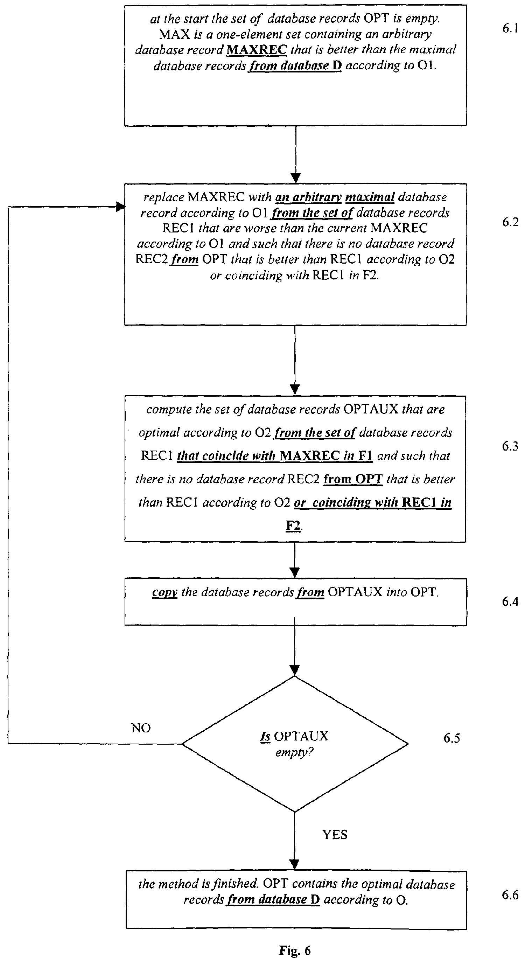

Method 6 will now be explained with reference to Fig. 6 and is still another embodiment of the present invention. For example, the database D1 consists of the following database records representing cars (each row of the table represents one database record, the columns are the database record fields):

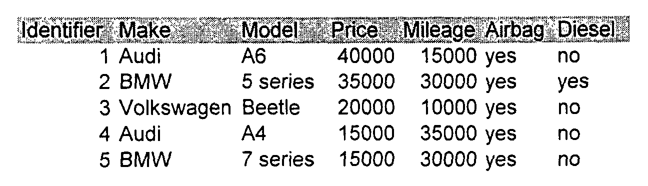

### Shopping scenario:

*The customer wants to buy a car with as little mileage as possible and as cheap as possible. S*/*He does not prioritize one selection criterion over the other one.*

These selection criteria are realized by two total orderings on the database record fields Mileage and Price and by computing the optimal database records according to cumulation of these orderings.

On the database D1 the following two total orderings are given:
(O1) A database record REC1 is better than a database record REC2 if the Price data value of REC1 is lower than the Price data value of REC2.
(O2) A database record REC1 is better than a database record REC2 if the Mileage data value of REC1 is lower than the Mileage data value of REC2.

The two total orderings O1 and O2 are combined by cumulation resulting in the strict partial ordering O on the database D1. According to O a database record REC1 is better than a database record REC2 if REC1 is better than REC2 according to at least one of the orderings O1 and O2; if REC1 is better than REC2 according to only one of these orderings then REC1 and REC2 have to coincide in the database record field the other ordering is referring to. O1 is referring to the database record field Price and O2 is referring to the database record field Mileage. For example let REC1 be the database record with Identifier = 3 and REC2 be the database record with Identifier = 2. REC1 is better than REC2 according to O: Price = 20000 for REC1 and Price = 35000 for REC2. Therefore REC1 is better than REC2 according to O1. Mileage = 10000 for REC1 and Mileage = 30000 for REC2. Therefore REC1 is better than REC2 according to O2.

Throughout this example we assume that the database system is a relational database system and that the iteration method is implemented by statements of the retrieval language SQL.

### Step 6.1:

At the start the set of database records OPT is empty. With SQL this can be expressed by

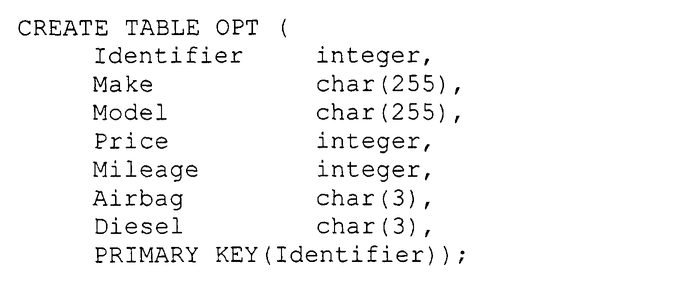

The auxiliary database record sets MAX and OPTAUX are defined by analogous statements.

As O1 is a total ordering, there are maximal database records according to O1 These database records are those with the minimal Price data value and can be computed by the following SQL statement:

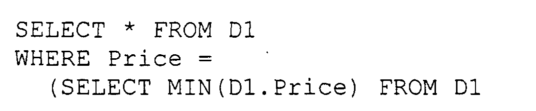

The maximal database records according to O1 are

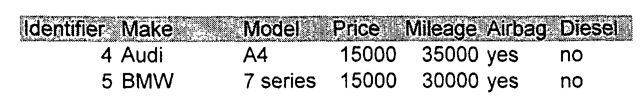

An arbitrary database record MAXREC that is better than the maximal database records according to O1 is inserted into MAX. MAX may contain the following database record:

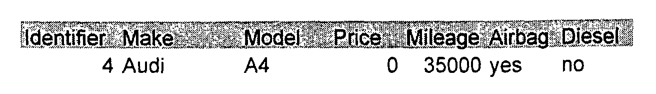

This database record is called MAXREC.

### Step 6.2:

The current MAXREC is replaced with a maximal database record according to O1 among all the database records REC1 that are worse than the current MAXREC according to O1 and such that there is no database record REC2 that is better than REC1 according to O2 or coincides with REC1 in Mileage. The set of possible new MAXREC database records can be computed by the following SQL statement:

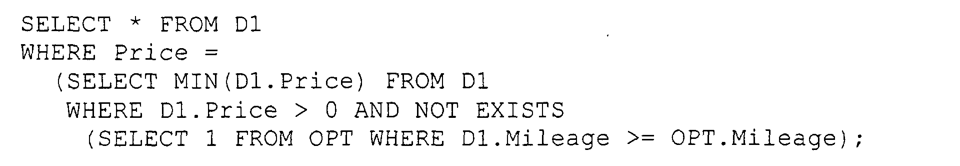

As OPT is empty, the set of possible new MAXREC database records consists of the following database records:

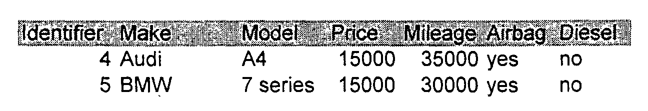

MAXREC is set to an arbitrary record among these records.

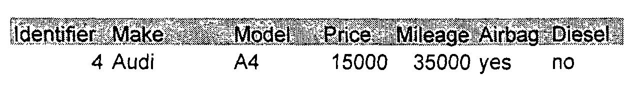

### Step 6.3:

Compute the set OPTAUX of optimal database records according to O2 among all the database records REC1 such that REC1 and MAXREC coincide in Price and there is no database record REC2 in OPT such that REC2 is better than REC1 according to O2 or REC2 coincides with REC1 in Mileage. The set of REC1 contains the following database records:

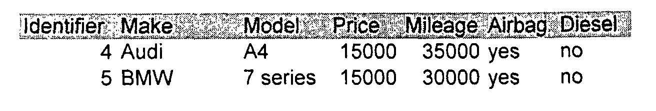

The optimal database records according to O2 can be computed by any method. They comprise the following database record:

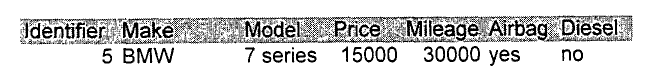

### Step 6.4:

Insert the database records contained in OPTAUX into OPT. OPT contains the following database record:

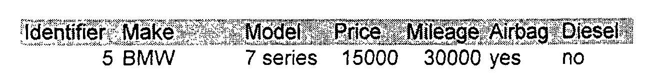

### Step 6.5:

As OPTAUX is not empty, Steps 6.2 through 6.4 are repeated.

### Step 6.2

The current MAXREC is replaced with a maximal database record according to O1 among all the database records REC1 that are worse than the current MAXREC according to O1 and such that there is no database record REC2 that is better than REC1 according to O2 or coincides with REC1 in Mileage. The set of possible new MAXREC database records can be computed by the same SQL statement as above.

The set of possible new MAXREC database records consists of one database record, only.
This database record replaces the database record MAXREC in the set MAX. Thus MAX now contains

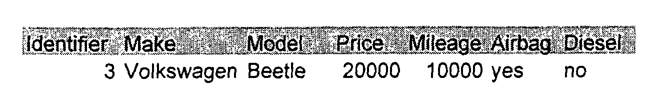

### Step 6.3:

Compute the set OPTAUX of optimal database records according to O2 among all the database records REC1 such that REC1 and MAXREC coincide in Price and there is no database record REC2 in OPT such that REC2 is better than REC1 according to O2 or REC2 coincides with REC1 in Mileage. The set of REC1 contains the following database records:

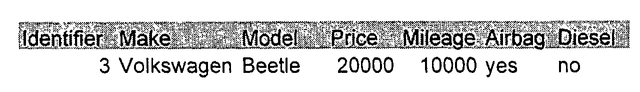

The optimal database records according to O2 can be computed by any method. They comprise the following database record:

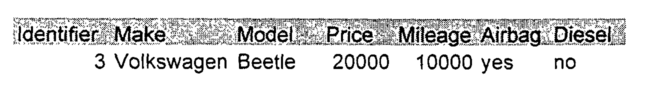

### Step 6.4:

Insert the database records contained in OPTAUX into OPT. OPT contains the following database records:

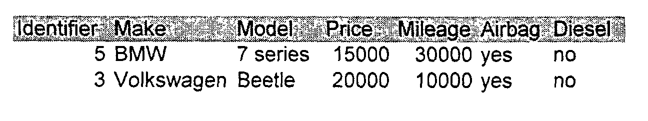

### Step 6.5:

As OPTAUX is not empty, Steps 6.2 through 6.4 are repeated.

### Step 6.2

The current MAXREC is replaced with a maximal database record according to O1 among all the database records REC1 that are worse than the current MAXREC according to O1 and such that there is no database record REC2 that is better than REC1 according to O2 or coincides with REC1 in Mileage. The set of possible new MAXREC database records can be computed by the same SQL statement as above.

The set of possible new MAXREC database records is empty. Thus there is no new MAXREC record and MAX is empty, too.

### Step 6.3:

As MAX is empty, OPTAUX is empty, too.

### Step 6.4:

No more database records are inserted into OPT. OPT contains the following database record:

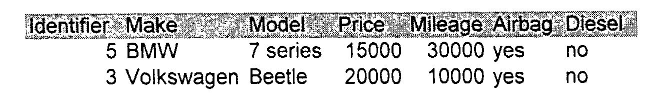

### Step 6.5:

As OPTAUX is empty, Steps 6.2 through 6.4 are not repeated anymore.

### Step 6.6:

The method is finished. OPT contains the optimal database records according to O.

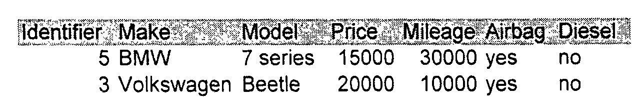

As a result a car with minimal price and the car with minimal mileage are offered.

### System for carrying out the before-mentioned methods

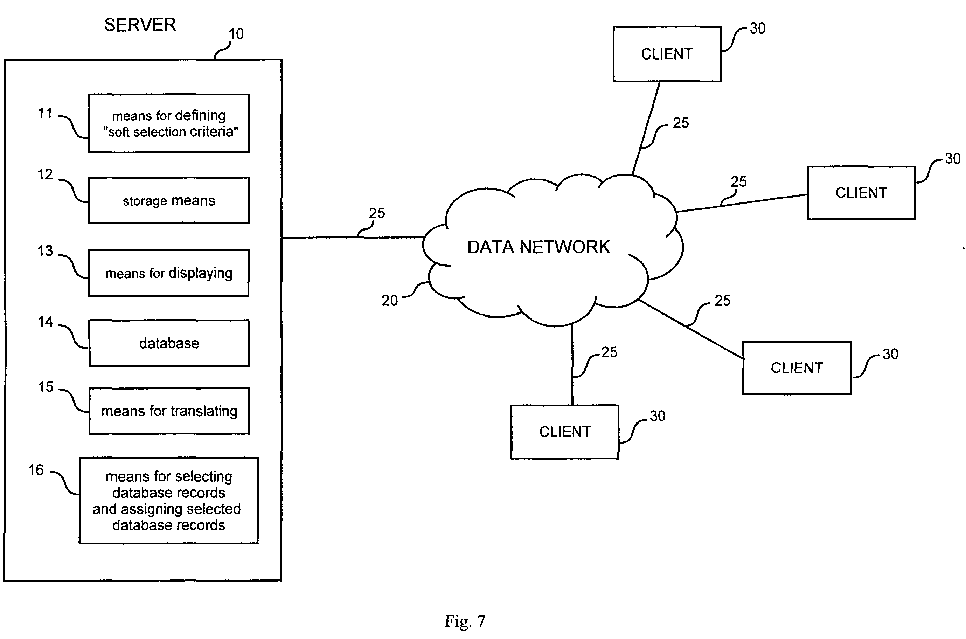

The afore-mentioned preferred embodiments of the present invention are carried out on a server/client environment which is shown in the block diagram of Fig. 7. Therein, a database to be retrieved is provided on a server 10 which may be a computer. The server 10 is connected through a data network 20 to at least one client 30 which may be a computer, such as a personal computer, or a communication device, for example, such as a mobile telephone (not explicitly shown).

The above mentioned data network 20 may be an intranet, an extranet or the internet wherein communication lines 25 connect the server and client thereto for allowing communication therebetween. In the case of mobile telephones the communication line can be a wireless connection.

Either the server 10 and/or the clients 30 is/are comprising means 11 for defining the soft selection criteria, means 12 for storing intermediate and final results of the retrieval process, such as the databases D1 and D2, or sets of database records, such as OPT, OPTAUX1, OPTAUX2, DAUX and MAXREC, means 13 for displaying the set of optimal database records such as a LED display or a computer monitor which is connected to the respective device, at least one database 14 which is to be retrieved, means 15 for translating the defined soft selection criteria to partial orderings, and means 16 for selecting database records according to partial orderings and assigning the selected database records to the set of optimal database records OPT. A split distribution of the just-mentioned means and the database to the server 10 and the client 30 is possible and within the scope of the present invention. Further the system may also only consist of a single server on which the database is provided.

Alternatively, the retrieval respectively the filtering process can be performed only at the server. The definition of the soft selection criteria can be done by a user who is located at the server or at the client, an administrator of the complete system, or by an automatic generation from the selection criteria.

A computer program product may comprise any suitable storage medium storing the computer program carrying out the method according to the present invention.

It is readily apparent to the expert from the foregoing that hereinbefore there have been mentioned embodiments which are exemplary only and which can be easily modified or supplemented without departing from the scope of the present invention. Furthermore it should be clear that the elements of the embodiments described above may be realized by means of software, or by means of hardware, or by a combination of both of them.

## Claims

1. A method for filtering a database by retrieving data records which are optimal according to a partial ordering O from the database comprising the steps of:
defining at least two partial orderings O1, O2 to be performed on the database records, wherein the partial orderings include better-worse relationships,
combining the partial orderings O1, O2 on the database records to the partial ordering O on the database records, and
selecting the database records REC1 from the database such that there is no database record REC2 in the database that is better than the database record REC1 according to the partial ordering O, and assigning the selected database records to a set of optimal database records OPT.

2. A method for filtering a database by retrieving data records which are optimal according to a partial ordering O from the database comprising the steps of:
defining one partial ordering O to be performed on the database records, wherein the partial ordering includes better-worse relationships, and
selecting the database records REC1 from the database such that there is no database record REC2 in the database that is better than the database record REC1 according to the partial ordering O, and assigning the selected database records REC1 to a set of optimal database records OPT.

3. A method according to claims 1, further comprising the step of:
defining at least two soft selection criteria instead of the partial orderings O1, O2, and then translating each selection criteria to said partial ordering O1, O2, respectively.

4. A method according to claims 2, further comprising the step of:
defining one soft selection criterion instead of the partial ordering O, and then translating the selection criteria to said partial ordering O.

5. A method according to any of claims 1 to 4, further comprising the step of displaying the database records of the set of optimal database records OPT.

6. A method according to any of claims 1 to 5, further comprising the step of storing the set of optimal database records on a storage medium.

7. A method according to claim 1 or 2, wherein said better-worse relationships are such that:
anyone of the database records is not better than itself,
if a first database record REC1 is better than a second database record REC2, then the second database record REC2 is not better than the first database record REC1,
if the first database record REC1 is better than the second database record REC2 and the second database record REC2 is better than a third database record REC3, then the first database record REC1 is better than the third database record REC3.

8. A method according to claim 1, wherein the partial orderings O1, O2 are combined by cumulation such that for at least one of the partial ordering O1 and O2 a first database record REC1 is better than a second database record REC2 according to the same partial ordering O1 or O2, and for the other partial ordering O2 or O1 according to which the first database record REC1 is not better than the second database record REC2, the first database record REC1 and the second database record REC2 coincide in database record fields the other partial ordering O2 or O1 is referring to.

9. A method according to claim 8, wherein the cumulation is associative such that cumulation of a first partial ordering O1 with the cumulation of a second partial ordering O2 with a third ordering O3 is identical to the cumulation of the cumulation of the first partial ordering O1 with the second partial ordering O2 with the third partial ordering 03.

10. A method according to claim 1, wherein the partial orderings O1 and O2 are combined by intersection such that a first database record REC1 is better according to all partial orderings O1 and O2.

11. A method according to claim 1, wherein the partial orderings O1, O2 are combined by union such that a first database record REC1 is better according to one of the partial orderings O1, O2.

12. A method according to claim 11, wherein the optimal data records from the database according to the union O of the partial orderings O1 and O2 is computed by the following steps:
computing a set OPTAUX1 of optimal database records according to the partial ordering O1,
computing a set OPTAUX2 of optimal database records according to the partial ordering O2, and
inserting into the set of optimal database records OPT only such database records, which occur in OPTAUX1 as well as in OPTAUX2.

13. A method according to claim 1, wherein the partial orderings O1, O2 are combined by a lexicographic combination O such that a first database record REC1 is better than a second database record REC2 according to the partial ordering O, if the first database record REC1 is better than the second database record REC2 according to the first partial ordering O1, or if the first database record REC1 and the second database record REC2 coincide in a database record field the first partial ordering O1 is referring to, then the first database record REC1 is better than the second database record REC2 according to the second partial ordering O2.

14. A method according to claim 13, wherein between the partial orderings O1, O2 there is a priority such that one partial ordering O1, O2 is prioritized over the other partial ordering O2, O1.

15. A method according to claim 8, wherein the combination of the partial orderings O1 and O2 is a cumulation of an empty ordering O1 on corresponding database record fields, and the second partial ordering O2.

16. A method according to claim 15, wherein the optimal data records from the database according to the cumulation of the empty partial ordering O1 and the partial ordering O2 is computed by partitioning the database records into subsets such that any two database records REC1 and REC2 in the same subset coincide in the database record fields the first partial ordering O1 is referring to, by computing the optimal data records from every subset of the partitioning according to the partial ordering O2 and by inserting the computed optimal data records into the set of optimal data records OPT.

17. A method according to claims 11, 12, 13, 15 and 16, wherein the lexicographic combination of claim 11 is the union of the first partial ordering O1 and the combination according to claim 14 where the empty partial ordering refers to the same database record fields as the partial ordering O1.

18. A method according to claim 1 or 2, further comprising the step of:
further applying the filtering method of claim 1 or 2 to a different filtering process.

19. A method according to claims 1 or 2, further comprising the steps of:
excluding the selected optimal database records of the set OPT from the database and applying the method of claims 1 or 2 once again on the database for obtaining new optimal database records which are worse than the excluded optimal database records.

20. A method according to claims 1 or 2, further comprising the steps of:
defining at least one hard selection criterion,
combining the hard selection criterion with the partial orderings according to the respectively translated soft selection criteria for selecting the database records REC1 from the database such that there is no database record REC2 in the database that is better than the database record REC1 according to the partial ordering O and which fulfills the hard selection criteria requirements.

21. A method according to claims 1 and 2, wherein selecting the database records REC1 from the database to be assigned to the set of (after finishing the method) optimal database records OPT comprises the steps of:
a) initializing a set of database records OPT to be empty,
b) selecting a database record REC1 from the database,
c) inserting REC1 into OPT if there is no database record REC2 in OPT that is better than REC1,
d) deleting all database records REC3 from the set OPT that are worse than REC1,
e) determining whether or not there have all database records REC1 have been selected, and if so, returning to step b), and if not so, finishing the method, wherein the set OPT now contains the optimal database records according to the partial ordering O.

22. A method according to claims 6 and 11, wherein selecting the database records REC1 from the database to be assigned to the set of optimal database records OPT comprises the steps of:
a) initializing the set of optimal database records OPT to be empty,
b) computing a set of database records DAUX as a set of all database records REC1 such that there is no database record REC2 in the set of optimal database records OPT which coincides with REC1 in database record fields the partial ordering O, which is the cumulation of the partial orderings O1 and O2, is referring to, or which is better than REC1 according to the partial ordering O,
c) computing a set of database records OPTAUX which includes database records that are optimal according to a lexicographic combination OAUX of the partial orderings O1 and O2 among the database records of the set DAUX,
d) inserting the database records of the set OPTAUX into the set OPT,
e) determining whether or not there are still database records in the set OPTAUX, and if so, returning to step b), and if not so, finishing the method, wherein the set OPT contains the optimal database records according to the partial ordering O.

23. A method according to claim 1 or 2, wherein selecting the database base records REC1 from the database to be assigned to the set of optimal database records OPT comprises the steps of:
a) initializing the set of optimal database records OPT to be empty,
b) computing a set of database records MAX which consists of an arbitrary database record MAXREC which is better than at least one maximal database record according to the partial ordering O1,
c) replacing the database record MAXREC with an arbitrary database record that is maximal according to the partial ordering O1 among all the database records REC1 which are worse than the current database record MAXREC according to the partial ordering O1, and such that there is no database record REC2 among the database records of the set OPT which is better than the database record REC1 according to the partial ordering O2 or coincides with the database record REC1 in at least one database record field F2 the partial ordering O2 is referring to,
d) computing a set of database records OPTAUX that are optimal according to the partial ordering O2 among all the database records REC1 such that the database records REC1 and MAXREC coincide in at least one database record field F1, the partial ordering O1 is referring to, and such that there is no database record REC2 that is better than the database record REC1 according to the partial ordering O2, or the database records REC1 and REC2 coincide in the database record fields F2,
e) inserting the database records of the set OPTAUX into the set OPT, and
f) determining whether or not there are still database records in the set OPTAUX, and if so, returning to step b), and if not so, finishing the method, wherein the set OPT contains the optimal database records according to the partial ordering O.

24. A method according to claims 3 or 4, wherein defining the selection criteria / criterion is performed by a user or an administrator, or is automatically generated, and translating the selection criteria to partial orderings is performed by a user or an administrator, or is automatically performed.

25. A method according to claims 1 or 2, wherein defining the partial ordering(s) is performed by a user or an administrator, or is automatically performed.

26. A method according to any of the foregoing claims, wherein the partial orderings are expressed by a language extension of SQL (Standard Query Language) in the case of relational databases.

27. A system for filtering a database by retrieving data records which are optimal according to a partial ordering O from the database comprising:
means for defining at least two soft selection criteria,
means for translating each soft criteria to a partial ordering O1, O2, respectively, to be performed on the database records, wherein the partial orderings include better-worse relationships,
means for combining the partial orderings O1, O2 on the database records to the partial ordering O on the database records, and
means for selecting the database records REC1 from the database such that there is no database record REC2 in the database that is better than the database record REC1 according to the partial ordering O, and assigning the selected database records to an initially empty set of optimal database records OPT.

28. A system for filtering a database by retrieving data records which are optimal according to a partial ordering O from the database comprising:
means for defining one soft selection criteria,
means for translating the soft criteria to a partial ordering O to be performed on the database records, wherein the partial orderings include better-worse relationships, and
means for selecting the database records REC1 from the database such that there is no database record REC2 in the database that is better than the database record REC1 according to the partial ordering O, and assigning the selected database records to an initially empty set of optimal database records OPT.

29. A system according to claims 27 or 28, further comprising means for displaying the set of optimal database records OPT.

30. A system according to any of claims 27 to 29, further comprising:
means for storing the set of optimal database records OPT, and wherein
the means for defining the selection criteria is a keyboard and the set of optimal database records OPT is displayed on a display or a monitor.

31. A system according to any of claims 27 to 30, wherein the system includes at least one server 10 on which the database to be retrieved is located and on which the method according to claims 1 to 23 is executable.

32. A method according to any of the claims 27 to 30, wherein the system includes at least one server computer 10 and at least one client device 30 being connected to the server computer 10 through a data network 20 through communication lines 25.

33. A method according to claim 32, wherein the client device 20 is a computer or a mobile telephone.

34. A system according to claim 31, wherein the data network is the internet, an intranet or an extranet.

35. A data structure comprising:
at least one set of optimal database records OPT which is generated by carrying out the method according to any of claims 1 to 26.

36. A data signal comprising:
at least one set of optimal database records OPT which is generated by carrying out the method according to any of claims 1 to 26.

37. A computer program comprising computer executable instructions for causing a computer to carry out a method according to any of claims 1 to 26.

38. A computer program product comprising computer executable instructions for causing a computer to carry out a method according to any of claims 1 to 26.
